(19) Europäisches Patentamt
European Patent Office
Office européen des brevets

(11) Publication number: 0 273 144 A2

# (12) EUROPEAN PATENT APPLICATION

(21) Application number: 87116334.1

(51) Int. Cl.[4]: C08G 63/62

(22) Date of filing: 05.11.87

The title of the invention has been amended (Guidelines for Examination in the EPO, A-III, 7.3).

(30) Priority: 15.12.86 US 941651

(43) Date of publication of application: 06.07.88 Bulletin 88/27

(84) Designated Contracting States: DE FR GB IT NL

(71) Applicant: GENERAL ELECTRIC COMPANY
1 River Road
Schenectady New York 12305(US)

(72) Inventor: Rosenquist, Niles Richard
4955 Lakeside Court
Evansville Indiana 47712(US)

(74) Representative: Catherine, Alain et al
General Electric France Service de Propriété Industrielle 18 Rue Horace Vernet B.P. 76
F-92134 Issy-les-Moulineaux Cedex(FR)

## (54) Cross-linked branched polycarbonate composition.

(57) A process comprising exposing to radiation a branched aromatic polycarbonate at least partially endcapped with a structure of the formula

$$-\overset{O}{\overset{\|}{C}}-\overset{H}{\overset{|}{C}}=\overset{H}{\overset{|}{C}}-R \quad \text{Figure 1}$$

wherein R is hydrogen or alkyl of one to three carbon atoms inclusive, the radiation of sufficient intensity and time duration to cause crosslinking of the branched aromatic polycarbonates which increases the organic solvent resistance of the polycarbonates.

EP 0 273 144 A2

Xerox Copy Centre

# COMPOSITIONS

## BACKGROUND OF THE INVENTION

The polycarbonate polymer family is a well-known grouping of polymers which exhibits excellent impact resistance properties, modulus, toughness and overall durability. However certain properties are of insufficient strength that the polymers cannot be used in certain applications. For example, the polymers are not currently usable in certain types of capacitors because they lack sufficient solvent resistance to withstand the coating process which the films must undergo in the manufacture of the capacitors. There is therefore an interest in upgrading the solvent resistance properties of the polycarbonate family of polymers. This present invention provides a method for upgrading the solvent resistance of branched polycarbonates.

There is provided a process for increasing the solvent resistance of branched polycarbonates.

There is provided a method for endcapping branched polycarbonates.

There is provided a new composition of crosslinked branched polycarbonates.

## SUMMARY OF THE INVENTION

In accordance with the invention, there is a process which comprises exposing to radiation a branched aromatic polycarbonate at least partially endcapped with a structure of the formula

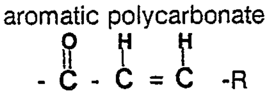 Figure 1

wherein R is hydrogen or alkyl of one to three carbon atoms inclusive, the radiation of sufficient intensity and time duration to cause crosslinking of the branched aromatic polycarbonates which increases the organic solvent resistance of the polycarbonates.

A further aspect of the invention is a crosslinked branched polycarbonate composition prepared by irradiating a branched polycarbonate at least partially endcapped with a structure of the formula

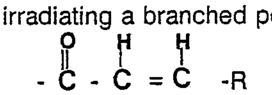 Figure 1

wherein R is hydrogen or alkyl of one to three carbon atoms, inclusive.

A still further aspect of the invention is a crosslinked branched polycarbonate composition linked through covalent bonds at the endcapping group, said endcapping group of the structure

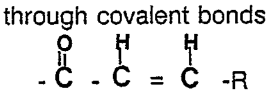 Figure 1

wherein R is hydrogen or alkyl of one to three carbon atoms, inclusive.

## DETAILED DESCRIPTION OF THE INVENTION

As used throughout this specification and claims, aromatic polycarbonate includes aromatic copolyestercarbonates as well. The branching in each of the aromatic polycarbonates or aromatic polyestercarbonates is brought on by the presence of a tri or greater functional phenol (3 or more phenolic hydroxyl groups) or ester producing group which brings about branches in the usual linear molecule. Examples of such branching agents and polycarbonates formed therefrom are found in British Patent No. 1,079,821 and U.S. Patent Nos. 3,544,514 and 4,001,184.

Aromatic polycarbonates are prepared in the conventional manner by reacting a dihydric phenol with a carbonate precursor in an interfacial polymerization process. Typical of some of the dihydric phenols that may be employed in the practice of this invention are bisphenol-A, (2,2-bis(4-hydroxy-3-methylphenyl) propane, 4,4-bis(4-hydroxyphenyl)heptane, 2,2-(3,5,3′,5′-tetrachloro-4,4′-dihydroxydiphenyl)propane, 2,2-(3,5,3′,5′-tetrabromo-4,4′-dihydroxydiphenyl)propane, (3,3′-dichloro-4,4′-dihydroxyphenyl)methane, bis 4-hydroxyphenyl sulfone and bis(4-hydroxyphenyl) sulfide. Other dihydric phenols of the bisphenol type are also available and are disclosed in U.S.P. Nos. 2,999,835; 3,028,365 and 3,334,154. Bisphenol-A is preferred.

It is, of course, possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in the preparation of the aromatic carbonate polymers of this invention. Also employed in the practice of this invention may be

blends of any of the above materials to provide the aromatic carbonate polymer.

The carbonate precursor may be either a carbonyl halide, a carbonate ester or a haloformate. The carbonyl halides which can be employed herein are carbonyl bromide, carbonyl chloride and mixtures thereof. Typical of the carbonate esters which may be employed herein are diphenyl carbonate, di-(halophenyl)carbonates such as di(chlorophenyl)carbonate, di-(bromophenyl) carbonate, di(trichlorophenyl)-carbonate, di-(tribromophenyl)carbonate, etc., di-(alkylphenyl)carbonate such as di(tolyl)carbonate, etc., di-(naphthyl)carbonate, di-(chloronaphthyl)carbonate, phenyl tolyl carbonate, chlorophenyl chloronaphthyl carbonate, etc., or mixtures thereof. The haloformates suitable for use herein include bis-haloformates of dihydric phenols (e.g. bischloroformates of hydroquinone), or glycols (bis-haloformates of ethylene glycol, neopentyl glycol, poly ethylene glycol, etc.). While other carbonate precursors will occur to those skilled in the art, carbonyl chloride, also known as phosgene, is preferred.

The polycarbonate polymers of this invention may be prepared by employing a molecular weight regulator, an acid acceptor, a branching agent and a catalyst. The molecular weight regulators which can be employed in carrying out the process of this invention include monohydric phenols such as phenol, Chroman-I, paratertiarybutylphenol, parabromophenol, primary and secondary amines, etc. when all of the chainstopper is not the acrylate-type group of Figure 1. Preferably, phenol is employed as the molecular weight regulator when 100% of the acrylate-type group is not employed.

A suitable acid acceptor may be either an organic or an inorganic acid acceptor. A suitable organic acid acceptor is a tertiary amine and includes such materials as pyridine, triethylamine, dimethylaniline, tributylamine, etc. The inorganic acid acceptor may be one which can be either a hydroxide, a carbonate, a bicarbonate, or a phosphate of an alkali or alkaline earth metal.

The catalysts which are employed herein can be any of the suitable catalysts that aid the polymerization of bisphenol-A with phosgene. Suitable catalysts include tertiary amines such as, for example, triethylamine, tripropylamine, N,N-dimethylaniline, quaternary ammonium compounds such as, for example, tetraethylammonium bromide, cetyl triethylammonium bromide, tetra-n-heptylammonium iodide, tetra-n-propylammonium bromide, tetra-methylammonium chloride, tetra-methylammonium hydroxide, tetra-n-butylammonium iodide, benzyltrimethylammonium chloride and quaternary phosphonium compounds such as, for example, n-butyltriphenyl phosphonium bromide and methyltriphenyl phosphonium bromide.

The polyfunctional aromatic compounds which cause the branching to occur contain at least three functional groups which are carboxyl, carboxylic anhydride, haloformyl, phenolic or mixtures thereof. Examples of these poly-functional aromatic compounds which may be employed in the practice of this invention include: trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride, phloroglucinol and the like. The preferred polyfunctional aromatic compounds are trimellitic anhydride or trimellitic acid, or their haloformyl derivatives.

Also, included herein are blends of a linear polymer and a branched polymer.

Within the definition of polycarbonate are also copolyestercarbonates, that is the polymer made from a dihydric phenol, a dibasic acid and a phosgene precursor. U.S.P. No. 3,169,121; 4,465,820 and 4,506,065 covering copolyestercarbonates and methods of preparing them is hereby incorporated by reference.

The method of preparing the thermoplastic resins other than the aromatic polycarbonates are equally well known, consequently no detailed procedures of preparation are necessary.

In preparing the novel branched polycarbonates and copolyestercarbonates of this invention, the endcapping agent employed in the synthesis is generally an acryloyl halide, preferably an acryloyl chloride

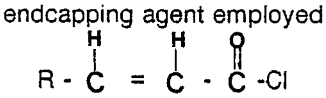

Figure 2

wherein R is hydrogen or alkyl of one to three carbon atoms, inclusive. Any quantity of this endcapping agent can be employed as long as there is crosslinking brought on by the presence of the acryloyl group. Generally, at least above about 10 % in a molar basis of the endcapping agents should be of the acryloyl halide. Preferably above about 50 % of the endcapping agent should be the acryloyl halide. For maximum crosslinking effect, all of the endcapping agent should be the acryloyl halide. The acryloyl halide can be added in the preparation of the polymer at the time the usual endcapping agent, phenol or p.tertbutylphenol, is added or it can be added during the addition of the carbonate or ester group precursors, such as phosgene or dibasic acid chlorides.

The branching agent generally used in the polycarbonate or copolyestercarbonate process is trimellityl trichloride abbreviated throughout as TMTC.

The radiation employed is of sufficient strength and type to cause the polycarbonates and copolyestercarbonates to crosslink. Present with the branched polycarbonates and copolyestercarbonates are linear

polycarbonates and copolyestercarbonates, if desired, so as to form blends of branched and linear molecules. The radiation can be, for example, U.V. radiation generated by lamp or electron beam radiation. This radiation can be applied to any type of extruded or molded article to generate the crosslinking but the invention is generally used to make cast film more solvent resistant.

In the examples below, the endcapping agents mentioned are 100% of that used in the synthesis of the polymer. The mole percent figure of endcapping agent is based on the moles of bisphenol-A used as 100%.

Below are examples of the invention. These examples are intended to illustrate rather than narrow the broad inventive concept.

PREPARATION OF COPOLYESTERCARBONATE CONTROLS AND EXAMPLES OF INVENTION

a. 6 mole % paratertiarybutyl phenol as end capping agent - no branching agent.

A 1000 ml four neck flask was fitted with a mechanical stirrer, a pH probe, an aqueous caustic inlet tube and a Claisen adapter to which was attached a dry ice condenser and a dropping funnel. To the flask was added 280 ml water, 340 ml methylene chloride, 1.4 ml triethyl amine (0.01 mole), 57 g (0.25 mole) bisphenol-A, and 2.25 g (0.015 mole) of p-tertbutyl phenol. With stirring and the pH maintained at 9 to 10 by addition of 25% aqueous sodium hydroxide, 26.8 g (0.132 mole) terephthaloyl dichloride and 4.7g (0.023 mole) isophthaloyl dichloride dissolved in 45 ml methylene chloride was added dropwise to the flask over 15 minutes. The dropping funnel was then replaced with a gas inlet tube and phosgene was introduced into the flask at a rate of 1 g/min. for 15 minutes. The resin layer was separated from the brine layer, then washed with 3 wt. % aqueous HCl until washing remained acidic, then twice with distilled water. The resin was then precipitated into 1500 ml of methanol in a Waring blender and washed with 500 ml more methanol.

b. 6 mole % acryloyl chloride endcapping agent - no branching agent.

The procedure of a. above was used except 1.36 g (0.015 mole) acryloyl chloride was used in place of the p-tertbutyl phenol, with the acryloyl chloride added dropwise with the isophthaloyl and terephthaloyl chloride mixture.

c. 9 mole % acryloyl chloride endcapping and no branching.

The procedure of b. above was used, with 2.04 g (0.0225 mole) acryloyl chloride.

d. 9 mole % acryloyl chloride end capping with 3 mole % TMTC branching.

The procedure of c. above was used except, additionally, 2.0 g (0.0075 mole) TMTC was added dropwise in the acid chloride mixture.

e. 9 mole % acryloyl chloride endcapping with 2.25 mole % TMTC branching.

The procedures of d. above was used with 1.5 g (0.0056 mole) TMTC.

f. 9 mole % acryloyl chloride endcapping agent with 1.5 mole % TMTC branching.

The procedure of d. above was used with 1.0 g (0.0038 mole) TMTC.

FILM PREPARATION

2.5 g of each resin was dissolved in 50 ml methylene chloride and 0.05 g diethoxyacetophenone (sensitizer) was mixed therein. The solution was filtered through a 1.2 u filter and then evaporated slowly on a glass plate in a 5″ by 10″ metal frame to yield films. Samples approximately 2 square inches in size were cut selecting areas of the film of 2 mil thickness.

PHOTOLYSIS

The film samples were taped to a sheet of polycarbonate and photolyzed using a Linde UV curing apparatus equipped with two medium pressure UV lamps set at 980 volts. The photolysis chamber was purged with nitrogen. The samples were placed on a moving belt and passed under the mercury lamps at a distance of 1/2 inch from the lamps at a rate of 36 ft/min., a frequency of five times. The total exposure time was approximately 0.29 minutes for each sample.

DETERMINATION OF PERCENT INSOLUBLE IN SAMPLES

The percent insoluble is a measure of the increased solvent resistance brought upon by the U.V. stimulated crosslinking.

The photolyzed samples were trimmed to remove areas covered by tape, weighed, and then soaked in 50 ml methylene chloride at room temperature for 12 hours with intermittent agitation. The insoluble portion was then collected by vacuum filtration on a 5.5 cm #1 grade filter paper and washed with an additional portion of about 10 ml of methylene chloride. The filter papers with samples were then dried one hour at 125°C in an oven. Samples were weighed. Filter papers were dried in the same oven before use and weighed before use. Below are the results:

TABLE

| SAMPLE | END CAP AGENT | BRANCHING AGENT | I.V., BEFORE IRRADIATION ($25°, CH_2Cl_2$) | % INSOLUBLE, AFTER IRRADIATION (DUPLICATE SAMPLE) #1 | % INSOLUBLE, AFTER IRRADIATION (DUPLICATE SAMPLE) #2 | OBSERVATION, AFTER IRRADIATION |
|---|---|---|---|---|---|---|
| a | 6 mole % p.t.butyl phenol | none | 0.461 | 0.2 | 0.3 | film tough |
| b | 6 mole % acryloyl chloride | none | 0.476 | 13.2 | 22 | film tough |
| c | 9 mole % acryloyl chloride | none | 0.370 | 18.6 | 28.7 | film very brittle. |
| d | 9 mole % acryloyl chloride | 3.0 mole % TMTC | 0.546 | 54.3 | 57.8 | film tough |
| e | 9 mole % acryloyl chloride | 2.25 mole % TMTC | 0.470 | 45.7 | 55.0 | film tough |
| f | 9 mole % acryloyl chloride | 1.5 mole % TMTC | 0.416 | 60.2 | 65.1 | film somewhat brittle. |

As is observed from the data, the presence of branching in the polymer brought upon substantially increased crosslinking when using an acryloyl endcap as measured by the greatly increased solvent resistance. The films remained tough, particularly those with an intrinsic viscosity above about 0.42, preferably 0.44.

**Claims**

1. A process comprising exposing to radiation a branched aromatic polycarbonate at least partially endcapped with a structure of the formula

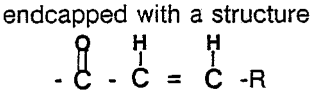

Figure 1

wherein R is hydrogen or alkyl of one to three carbon atoms inclusive, the radiation of sufficient intensity and time duration to cause crosslinking of the branched aromatic polycarbonates which increases the organic solvent resistance of the polycarbonates.

2. The process in accordance with claim 1 wherein R is hydrogen.

3. The process in accordance with claim 1 wherein R is methyl.

4. The process in accordance with claim 1 wherein at least 50 mole percent of the endcapping agent is of the structure in claim 1.

5. The process in accordance with claim 1 wherein the branched polycarbonate prior to irradiation has an intrinsic viscosity in methylene chloride at 25°C of at least about 0.42.

6. A composition comprising a crosslinked, branched polycarbonate composition prepared by irradiating a branched polycarbonate at least partially endcapped with a structure of the formula

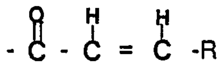 Figure 1

wherein R is hydrogen or alkyl of one to three carbon atoms, inclusive.

7. The composition in accordance with claim 6 wherein R is hydrogen.

8. The composition in accordance with claim 6 wherein R is methyl.

9. The composition in accordance with claim 6 wherein at least 50 mole percent of the endcapping agent is the structure in claim 6.

10. The composition in accordance with claim 6 wherein the branched polycarbonate prior to irradiation has an intrinsic viscosity in methylene chloride at 25°C of at least about 0.42.

11. A composition comprising a crosslinked branched polycarbonate composition linked through covalent bonds at the the endcapping group, said endcapping group of the structure

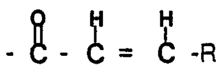 Figure 1

wherein R is hydrogen or alkyl of one to three carbon atoms, inclusive.

12. The composition in accordance with claim 11 wherein R is hydrogen.

13. The composition in accordance with claim 11 wherein R is methyl..

14. The composition in accordance with claim 11 wherein at least 50 mole percent of the endcapping agent is the structure in claim 11.